# EUROPEAN PATENT APPLICATION

(11) **EP 2 375 772 A1**
(43) Date of publication of application: **12.10.2011**
(21) Application number: 09834367.6
(22) Date of filing: 17.12.2009
(51) Int. Cl.: H04Q 9/00

(54) **REMOTE MONITORING AND CONTROL APPARATUS**

(30) Priority: 22.12.2008 JP 2008325591
(71) Applicant: Sanden Corporation, Isesaki-shi Gunma 372-8502 (JP)
(72) Inventor: MASHIMO, Tetsuya, Isesaki-shi Gunma 372-8502 (JP); FUKAMACHI, Munenori, Isesaki-shi Gunma 372-8502 (JP); IKEDA, Takahiro, Isesaki-shi Gunma 372-8502 (JP); NAGAI, Mika, Isesaki-shi Gunma 372-8502 (JP)
(74) Representative: Haley, Stephen
(86) International application number: PCT/JP2009/006968
(87) International publication number: WO 2010/073555

(57) **Abstract**

To provide a remote monitoring and control apparatus that ensures safety while an operator works on the apparatus. A remote monitoring and control apparatus 1 includes a communication module 10, a control circuit 20, and an interface circuit 300. The interface circuit 300 includes terminal blocks 151, a jumper switch 320 for changing settings, and heat generating components 341, 342, 351, and 352. The interface circuit 300 is mounted on a circuit board 150 housed in a first enclosure 100. The first enclosure 100 includes an enclosure body 110 having an opening, and a lid 120. The terminal blocks 151 and the jumper switch 320 are mounted so as to be exposed in the opening of the enclosure body 110, and the heat generating components 341, 342, 351, and 352 are mounted so as to be hidden from the opening of the enclosure body 110.

## Description

### TECHNICAL FIELD

The present invention relates to a remote monitoring and control apparatus for remotely monitoring or controlling devices over a wireless packet communication network.

### BACKGROUND ART

Telemetering, which is a technique of collecting information over a wireless packet communication network, has been widely used in these years. Telemetering was originally a generic term referring to a mechanism for acquiring readings of measuring instruments using a communication line. The term, however, has extended to now include monitoring and remote control of device operations in general in addition to data collection. Typical applications of telemetering include sales management systems for vending machines, usage management systems for gas and water, operation monitoring systems for various devices such as boilers, and management systems for unattended parking lots. In telemetering, a remote monitoring and control apparatus is installed in conjunction with a device to be monitored or controlled. Patent Document 1 describes an example of a remote monitoring and control apparatus. The apparatus described in Patent Document 1 is used as a system for monitoring gas supply, and a pressure transmitter for generating monitoring data is connected to the apparatus. The pressure transmitter is an apparatus to detect the secondary pressure of a governor adjusting gas supply pressure. To the pressure transmitter, a direct current of 24 V is supplied from the remote monitoring and control apparatus, and analog data representing a detected pressure is input to the remote monitoring and control apparatus.
PATENT DOCUMENT 1: Japanese Patent Publication 06-141369

### DISCLOSURE OF THE INVENTION

### PROBLEMS TO BE SOLVED BY THE INVENTION

The remote monitoring and control apparatus above, however, has a disadvantage of inapplicability to other systems because it is specialized for monitoring of gas supply. Specifically, input signals to the remote monitoring and control apparatus can require power supply from the apparatus if the connected device is a sensor or the like as described above; however, required specifications for power supply vary from device to device. In addition, input signals to the remote monitoring and control apparatus may be AC signals or DOC signals, and their maximum voltage can also vary. One possible way to address this problem is to equip the apparatus with an interface circuit for accommodating various input forms. Because the interface circuit needs to handle high voltages in particular, its components, e.g., resistors and transistors, may generate high heat. This can lead to an accident like a burn as a result of an operator touching a heated component while connecting a device with the remote monitoring and control apparatus or changing apparatus settings.

The present invention has been made in view of this circumstances and an object thereof is to provide a remote monitoring and control apparatus that ensures safety while an operator works on the apparatus.

### MEANS FOR SOLVING THE PROBLEMS

To attain the object, a remote monitoring and control apparatus according to the invention includes a communication module for connection to a wireless packet communication network, a control circuit for performing communication using the communication module and for monitoring of a monitoring target, an interface circuit between the control circuit and the monitoring target, a circuit board on which at least the interface circuit is mounted, and a box-shaped enclosure in which the circuit board is housed, wherein the interface circuit includes a heat generating component and a connecting terminal; the enclosure includes an enclosure body having an opening formed thereon and a lid to cover the opening of the enclosure body; and the connecting terminal is mounted at exposed positions in the opening and the heat generating component is mounted at positions hidden from the opening.

According to the invention, when the lid is removed from the enclosure body, the connecting terminal is exposed in the opening but the heat generating component is hidden from the opening. This can prevent an operator from touching the heat generating component when connecting the monitoring target with the connecting terminal, ensuring the operator's safety.

As an example of a preferred embodiment of the invention, it is proposed to form the opening of the enclosure body from a portion of an upper surface of the enclosure body to a side surface that is contiguous with the upper surface. In the embodiment, it is more preferable to form a divider that extends from an edge of the opening on the upper surface toward a bottom. If the interface circuit includes switching means for changing a mode of receiving a signal from the monitoring target, it is preferable to mount the switching means on the circuit board so as to be exposed in the opening of the enclosure body because it allows safe manipulation of the switching means as well.

The heat generating component of the interface circuit may include a resistor for reducing a voltage of an AC signal or a DC signal from the monitoring target and a semiconductor element that drives a photocoupler provided for transmitting a signal to the control circuit, for example.

### ADVANTAGES OF THE INVENTION

As described above, according to the invention, when the lid is removed from the enclosure body, the connecting terminals are exposed in the opening but the heat generating components are hidden from the opening. This can prevent an operator from touching the heat generating components when connecting a monitoring target with a connecting terminal, ensuring the operator's safety.

### BRIEF DESCRIPTION OF THE DRAWINGS

Figure 1 is a perspective view of a remote monitoring and control apparatus with its lid removed.
Figure 2 is a functional block diagram of the remote monitoring and control apparatus.
Figure 3 is a circuit diagram of an interface circuit.
Figure 4 is a side sectional view of the remote monitoring and control apparatus.
Figure 5 is a top view of the interface circuit.

### BEST MODE FOR CARRYING OUT THE INVENTION

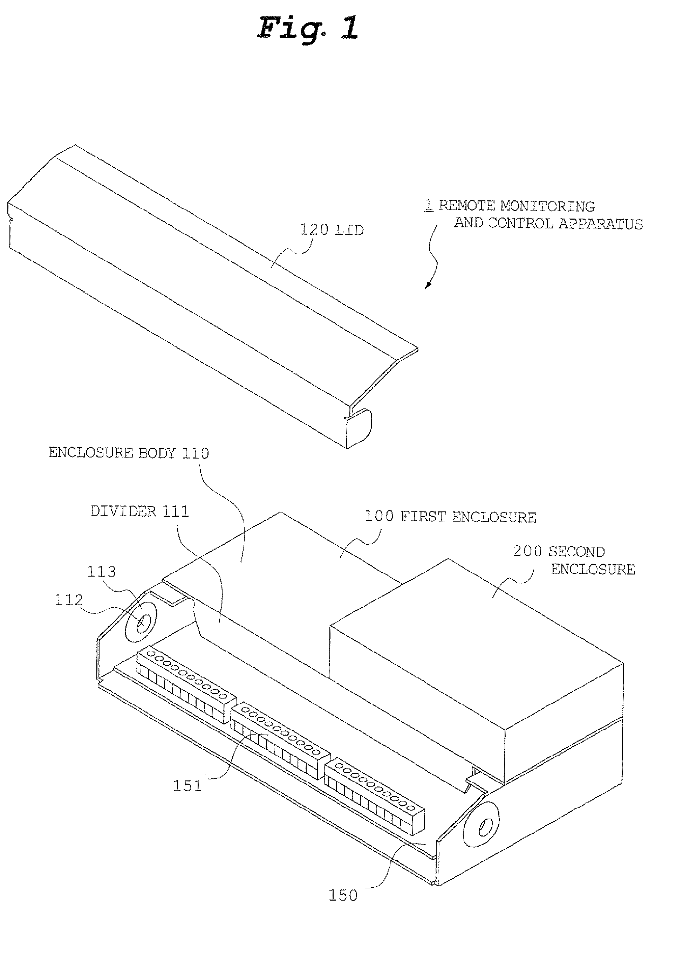

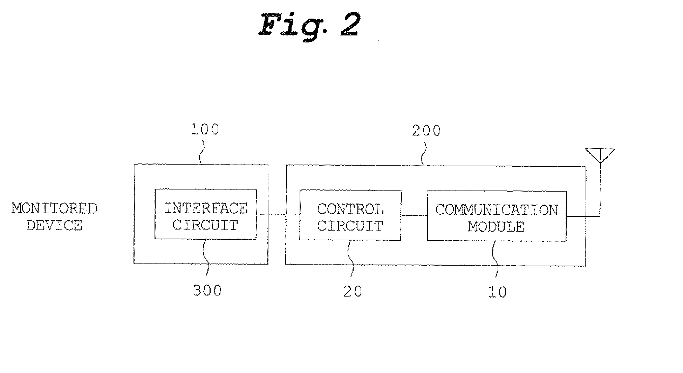

A remote monitoring and control apparatus according to an embodiment of the invention will be described with reference to drawings. Figure 1 is a perspective view of the remote monitoring and control apparatus with its lid removed, and Figure 2 is a functional block diagram of the remote monitoring and control apparatus.

As shown in Figure 1, a remote monitoring and control apparatus 1 according to the embodiment includes a first enclosure 100 having a box-like shape and a second enclosure 200 having a box-like shape and laid on the first enclosure 100. The first enclosure 100 has an inclined surface formed from the upper surface to a side of its thin, box-like structure. The first enclosure 100 has an enclosure body 110 which has an opening from a portion of the upper surface over the inclined surface to a side (the front side) which is contiguous with the inclined surface, and a lid 120 which covers the opening of the enclosure body 110. The enclosure body 110 has a divider 11 extending from an edge of the upper opening toward the bottom. On sides of the enclosure body 110, through-holes 112 for cabling are formed. The through-holes 112 each has a grommet 113 is fitted thereon.

As shown in Figure 2, the remote monitoring and control apparatus 1 includes a communication module 10 for connecting to a wireless packet communication network, a control circuit 20 for performing communication using the communication module 10 and monitoring and/or control of a monitored device, and an interface circuit 300 for interfacing with the monitored device. The control circuit 20 is mounted on a circuit board (not shown) placed in the second enclosure 200. The communication module 10 is also placed in the second enclosure 200. The interface circuit 300 is mounted on a circuit board 150 placed in the first enclosure 100. The circuit board (not shown) in the second enclosure 200 is electrically connected with the circuit board 150 in the first enclosure 100 by a cable (not shown) that is run along a path formed between the two enclosures.

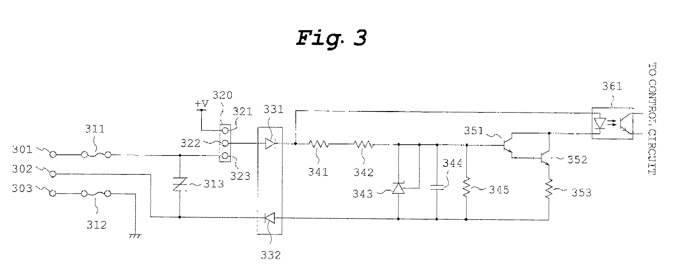

Figure 3 is a circuit diagram of the interface circuit 300. Although the interface circuit 300 has eight input channels in this embodiment, only one input channel is described for simplicity.

The interface circuit 300 is designed to accept various types of monitoring data. To be specific, the interface circuit 300 can accept AC and DC signals output by the monitored device or a sensor or the like attached to the device. The interface circuit 300 can also accommodate a case where power supply is required for the monitored device or a sensor attached to the device to output monitoring data, which can be the case when the sensor is a switching element or an element with variable resistance, for example. The interface circuit 300 will be described in greater detail below.

The interface circuit 300 has three input terminals 301, 302, and 303. For monitoring of AC or DC signals, input terminals 301 and 302 are used. When monitoring DC signals, the input terminal 301 is positive and the input terminal 302 is negative. When power supply is required, the input terminals 302 and 303 are used.

The input terminal 303 is grounded via a fuse 312. The input terminal 301 is connected via a fuse 311 with one terminal of a varistor 313 intended for circuit protection. The other terminal of the varistor 313 is connected with the input terminal 302. One terminal of the varistor 313 (on the side of input terminal 301) is connected with a third terminal 323 of a jumper switch 320. To a first terminal 321 of the jumper switch 320, a power source is connected. When monitoring AC or DC signals, the jumper switch 320 uses a jumper pin (not shown) to short between the second terminal 322 and the third terminal 323. When power supply is required, the jumper switch 320 uses a jumper pin to short between the first terminal 321 and the second terminal 322.

The second terminal 322 of the jumper switch 320 is connected with the anode of a diode 331 as a rectifier. The other terminal (on the side of input terminal 302) of the varistor 313 is connected with the cathode of a diode 332 as a rectifier. The cathode of the diode 331 is connected with the cathode of a shunt regulator 343 via two resistors 341 and 342 as current limiters. The shunt regulator 343 is for constant voltage, its reference terminal being connected with its cathode and its anode connected with the anode of the diode 332. Between the cathode and anode of the shunt regulator 343, a capacitor 344 and a resistor 345, as well as NPN transistors 351 and 352 in Darlington connection are connected. An emitter of the transistor 352 is connected with the resistor 345 via a resistor 353. Collectors of the transistors 351 and 352 are connected with the cathode of a photocoupler 361. The anode of the photocoupler 361 is connected with the cathode of the diode 331. A light-receiving element side of the photocoupler 361 is connected with the control circuit 20.

The operation of the interface circuit 300 will be now described. Operations for monitoring AC or DC signals are described first. A signal applied between the input terminal 301 and the input terminal 302 is rectified by the diodes 331 and 332. The rectified signal goes through voltage reduction in resistors 341 and 342 and fixing to a constant voltage in the shunt regulator 342 to drive the transistors 351 and 352. The operation of the transistors 351 and 352 in turn drives the photocoupler 361. Thereby, the input signal is delivered to the control circuit 20. When especially a high-voltage signal (e.g., AC 200V, AC 100V) is input, the resistors 341 and 342 will generate high heat.

Operations performed when power supply is required are described next. The first terminal 321 of the jumper switch 320 is shorted with the second terminal 322 of the jumper switch 320 by a jumper pin, and power is supplied to the input terminal 302 via circuit elements including resistors 341, 342 and transistors 351, 352. Because a sensor or the like is connected between the input terminals 302 and 303, and the input terminal 303 is grounded, the transistors 351 and 352 operate in accordance with the state of the sensor or the like. The operations of the transistors 351 and 352 in turn drive the photocoupler 361 so that the status of the sensor and the like are delivered to the control circuit 20 as an input signal.

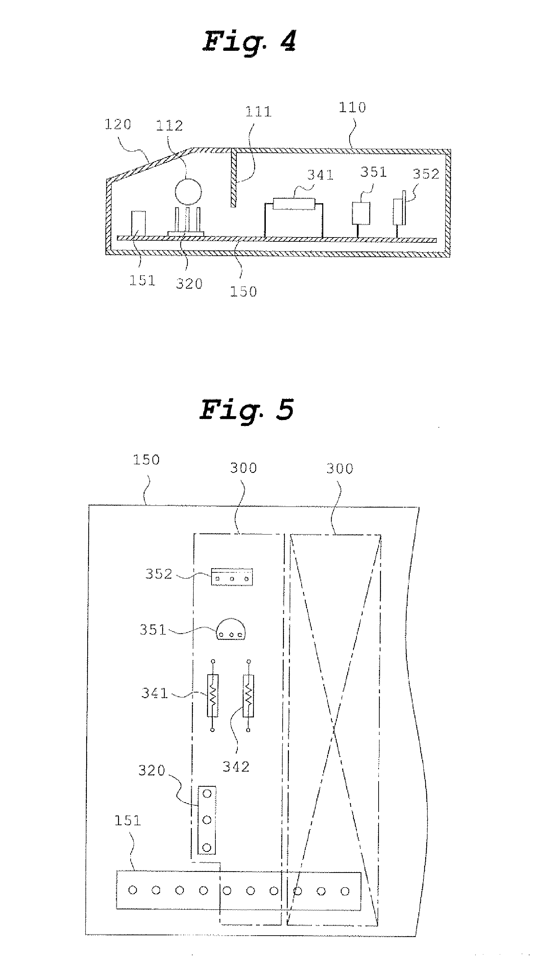

A feature of the remote monitoring and control apparatus 1 according to the embodiment is how the interface circuit 300 is implemented. The feature is described with reference to Figures 1, 4 and 5. Figure 4 is a side sectional view of the remote monitoring and control apparatus 1, and Figure 5 is a top view of the interface circuit 300. For the sake of simplicity, only components pertaining to the gist of the invention will be described.

The interface circuit 300 is mounted on the circuit board 150. The circuit board 150 is rectangular and slightly smaller than the bottom of the enclosure body 110 of the first enclosure 100, being laid in the bottom of the enclosure body 110 via a spacer. On the opening-side edge of the circuit board 150, multiple terminal blocks 151 are mounted. Each of the terminal blocks 151 has multiple terminals, which correspond to the input terminals 301 to 303. The jumper switch 320 is positioned in the vicinity of the terminal blocks 151 on the side of the divider 111. At the back of the jumper switch 320, the resistors 341, 342, and transistors 351, 352 are mounted. Note that the resistors 341, 342 and transistors 351, 352 are located on the opposite side of the opening of the enclosure body 110 across the divider 111. In other words, the terminal blocks 151 and the jumper switch 320 are exposed in the opening of the enclosure body 110, whereas the resistors 341, 342, and the transistors 351, 352, which are heat generating components, are hidden from the opening by the divider 111. This can prevent an operator from touching the heat generating components when wiring the terminal blocks 151 or manipulating the jumper switch 320.

As described above, the remote monitoring and control apparatus 1 of the invention ensures safety by preventing an operator from touching heat generating components, such as resistors and transistors, when wiring the terminal blocks 151 or manipulating the jumper switch 320.

While an embodiment of the invention has been described in detail, the invention is not limited to the embodiment. For example, although the interface circuit 300 is housed in the first enclosure 100 and the communication modules 10 and the control circuit 20 are in the second enclosure 200 in the above-described embodiment, they may be contained in a single enclosure. In addition, although the embodiment above shows resistors and transistors as examples of heat generating components, the present invention is also applicable when other components that can generate heat are used.

### INDUSTRIAL APPLICABILITY

By mounting connecting terminals at exposed positions in the opening of the enclosure body and heat generating components at locations hidden from the opening, the invention is suitable as a remote monitoring and control apparatus that ensures an operator's safety at the time of connecting terminals.

### DESCRIPTION OF SYMBOLS

10...communication module, 20...control circuit, 100...first enclosure, 110...enclosure body, 120...lid, 150...circuit board, 151...terminal block, 200...second enclosure, 300...interface circuit, 320 ... jumper switch, 341 and 342...resistor, 351 and 352...transistor

## Claims

1. A remote monitoring and control apparatus comprising:
a communication module for connection to a wireless packet communication network;
a control circuit for performing communication using the communication module and for monitoring of a monitoring target;
an interface circuit between the control circuit and the monitoring target;
a circuit board on which at least the interface circuit is mounted; and
a box-shaped enclosure in which the circuit board is housed,
wherein
the interface circuit includes a heat generating component and a connecting terminal,
the enclosure includes an enclosure body having an opening formed thereon and a lid to cover the opening of the enclosure body, and
the connecting terminal is mounted at exposed position in the opening and the heat generating component is mounted at position hidden from the opening.

2. The remote monitoring and control apparatus according to claim 1, wherein the opening of the enclosure body is formed from a portion of an upper surface of the enclosure body to a side surface that is contiguous with the upper surface.

3. The remote monitoring and control apparatus according to claim 2, wherein the enclosure body comprises a divider that extends from an edge of the opening on the upper surface toward a bottom.

4. The remote monitoring and control apparatus according to any one of claims 1 to 3, wherein the interface circuit comprises switching means for changing a mode of receiving a signal from the monitoring target, and the switching means is mounted on the circuit board so as to be exposed in the opening of the enclosure body.

5. The remote monitoring and control apparatus according to any one of claims 1 to 4, wherein the heat generating component of the interface circuit includes a resistor for reducing a voltage of an AC signal or a DC signal from the monitoring target.

6. The remote monitoring and control apparatus according to any one of claims 1 to 5, wherein the heat generating component of the interface circuit includes a semiconductor element that drives a photocoupler provided for transmitting a signal to the control circuit.
